# EUROPÄISCHE PATENTSCHRIFT

(11) **EP 4 478 083 B1**
(45) Veröffentlichungstag und Bekanntmachung des Hinweises auf die Patenterteilung: **08.10.2025**
(21) Anmeldenummer: 23179534.5
(22) Anmeldetag: 15.06.2023
(51) Int. Cl.: G01S 7/497, G01S 17/89, G02B 26/10, G02B 26/12, G01S 7/481

(54) **MEHREBENENSCANNER UND VERFAHREN ZUM ERFASSEN VON OBJEKTEN**
MULTILEVEL SCANNER AND METHOD FOR DETECTING OBJECTS
SCANNER MULTI-PLAN ET PROCÉDÉ DE DÉTECTION D'OBJETS

(43) Veröffentlichungstag der Anmeldung: 18.12.2024
(73) Patentinhaber: SICK AG, 79183 Waldkirch (DE)
(72) Erfinder: Klinke, Hannes, Meddewade (DE); Feise, Gerold, Hamburg (DE)

(56) Entgegenhaltungen:
- WO-A1-98/16801
- US-A1- 2009 002 678
- US-A1- 2019 310 351

## Beschreibung

Die Erfindung betrifft einen Mehrebenenscanner und ein Verfahren zum Erfassen von Objekten in einem Überwachungsbereich mit mehreren übereinanderliegenden Ebenen nach dem Oberbegriff von Anspruch 1 beziehungsweise 11.

Scanner werden für vielfältige Überwachungs- und Vermessungsaufgaben verwendet. Dazu tastet ein Lichtstrahl einen Bereich ab und wertet das reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laser- oder LiDAR (Light Detection And Ranging) - Scanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Lichtstrahl, und es wird die Phase zwischen einer Referenz und dem empfangenen Lichtstrahl ermittelt. Pulsbasierte Verfahren prägen dem Lichtstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Weiterhin sind als entfernungsmessende Laserscanner frequenz-modulierter-Dauerstrich (Frequency Modulated Continuous Wave, FMCW) - LiDAR-Scanner bekannt. Grundlagen der FMCW-LiDAR Technologie sind beispielsweise in der wissenschaftlichen Veröffentlichung "Linear FMCW Laser Radar for Precision Range and Vector Velocity Measurements" (Pierrottet, D., Amzajerdian, F., Petway, L., Barnes, B., Lockard, G., & Rubio, M. (2008). Linear FMCW Laser Radar for Precision Range and Vector Velocity Measurements. MRS Proceedings, 1076, 1076-K04-06. doi:10.1557/PROC-1076-K04-06) oder der Doktorarbeit "Realization of Integrated Coherent LiDAR" (T. Kim, University of California, Berkeley, 2019. https://escholarship.org/uc/item/1d67v62p) beschrieben.

Im Gegensatz zu auf Lichtlaufzeitmessung von Laserpulsen basierenden LiDAR-Scannern oder Laserentfernungsmessern sendet ein FMCW-LiDAR-Scanner keine gepulsten, sondern kontinuierliche Sendelichtstrahlen in einen Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz eines gesamten Frames, der aus 100.000 Messpunkten und mehr bestehen kann, liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes Sendelicht weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Scanner werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplitudenmodulierten inkohärenten LiDAR-Messprinzipien unter anderem den Vorteil einer erhöhten Immunität bezüglich Fremdlicht von beispielsweise anderen optischen Sensoren/Sensorsystemen oder der Sonne.

Bekannte Laserscanner weisen einen Drehspiegel oder ein Polygonrad auf, die um eine Rotationsachse rotieren, um periodisch eine Überwachungsebene oder ein Segment einer zweidimensionalen Überwachungsebene abzutasten. In vielen Anwendungen besteht aber der Wunsch, das Umfeld nicht nur in einer einzigen Ebene zu erfassen. Dies gilt insbesondere in mobilen Anwendungen, etwa bei führerlosen Fahrzeugen (AGV, Automated Guided Vehicle), wo die Anforderung besteht, den Boden mit Kanten und Absätzen ebenso zu erkennen wie Objekte, die in unterschiedlichen Höhen in den Fahrbereich ragen. Eine andere Anwendung ist die Überwachung und Klassifizierung von Fahrzeugen, beispielsweise an Autobahnen oder an automatischen Erfassungspunkten.

Der Stand der Technik kennt dreidimensionale Scanner, in denen der Sensor als Ganzes oder der Drehspiegel zusätzlich periodisch verkippt wird. Das erfordert aber jeweils sehr aufwändige Konstruktionen. Oftmals genügt es, wenn nicht ein ganzer Raumbereich, sondern nur einige übereinander geschichtete Ebenen überwacht werden können.

Eine Möglichkeit, eine derartige Mehrebenenabtastung zu erreichen, besteht darin, statt eines einfachen Polygonrads Spiegelräder als Strahlablenkeinheit zu verwenden, deren Spiegelfacetten bezüglich der Rotationsachse des Polygonrads unterschiedliche Neigungen beziehungsweise Verkippungen aufweisen. Durch die Verwendung eines Polygonrads verringert sich zwar der Scanwinkelbereich auf typischerweise weniger als 100°, aber dafür wird durch die geneigten Spiegelfacetten je Umdrehung der Überwachungsbereich mehrfach in unterschiedlichen Höhen abgetastet. Der Lichtstrahl verläuft dabei auf einer Bahnkurve, die im Überwachungsbereich übereinander liegende Abtastebenen in verschiedenen Höhen erzeugt.

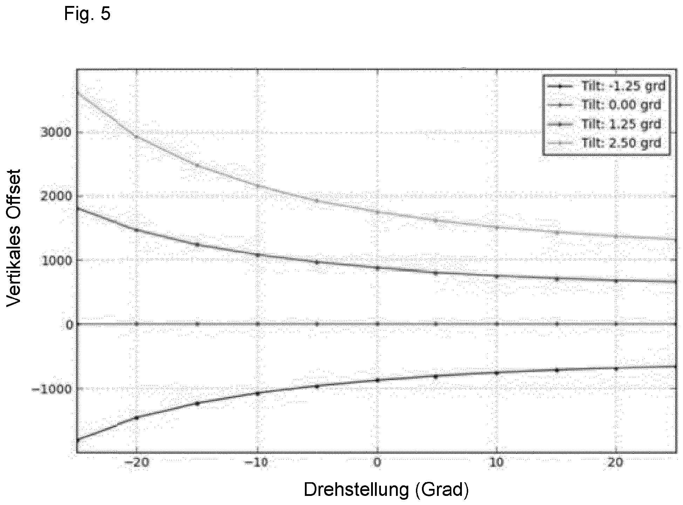

Allerdings haben solche Spiegelräder den Nachteil, dass durch den unterschiedlichen Einfallswinkel des Abtaststrahls auf die Spiegelfacetten im Verlauf der Drehbewegung die Abtastebenen verzerrt werden, sofern ein Feed-Winkel größer als 0° (also nicht direkt von vorne kommend) gewählt wird, was fast immer der Fall ist. Dies ist in Figur 5 illustriert, in der für mehrere Ebenen ein vertikales Offset über den Drehwinkel des Rasterspiegelrads aufgetragen ist. Anders ausgedrückt sind die Scanlinien auf einer Zielebene im Überwachungsbereich gezeigt, die von mehreren unterschiedlich geneigten Spiegelfacetten erzeugt werden.

Wie in Figur 5 zu erkennen, ist nur die mittlere Linie einer Spiegelfacette ohne Verkippung eine Gerade. Es ist nun nicht problematisch, dass die anderen Linien gekrümmt sind. Das liegt daran, dass ein Mehrebenenscanner genaugenommen keine mehreren Ebenen, sondern Kegelmantelflächen erfasst. Deshalb sind radial die auf eine Zielebene projizierten Scanlinien bei geneigten Spiegelfacetten gekrümmt. Soweit ist der Unterschied zu einer Ebene nicht allzu relevant, weil aufgrund der kleinen Kippwinkel der Kegelwinkel sehr groß ist.

Störend ist vielmehr die Tatsache, dass die Scanlinien zu der Mittellinie bei Drehstellung 0° asymmetrisch sind. Die vertikale Winkelauflösung bei positiven Drehstellungen ist deshalb besser als bei negativen Drehstellungen, und damit sind zu einer Facette gehörige Erfassungsbereiche auch in polarer Betrachtung auf einem Kegelmantel nicht mehr eben. Das vertikale Auflösungsvermögen hängt in unerwünschter Weise von der Winkelstellung des Rasterspiegelrads ab.

Geneigte Spiegelflächen führen also zu verzerrten, parabolischen Strahlablenkungen insbesondere im Fernbereich, die eine äquidistante Abrasterung im Fernbereich erschweren. Wenn die parabolischen Kurven zu weit auseinanderlaufen, kann es sein, dass die Randbereiche außerhalb eines interessierenden Bereichs (Region of Interest, ROI) liegen. Im Extremfall verlaufen die Strahlen außerhalb des Überwachungsbereiches und es wird Messzeit verschwendet, in der kein sinnvoller Output generiert wird. Außerdem reduziert sich die Punktdichte in der ROI des Überwachungsbereichs.

Die DE 36 02 008 A1 offenbart eine optische Abtastvorrichtung mit einem Spiegelrad. Die Spiegelfacetten dieses Spiegelrads sind unterschiedlich gekrümmt. Als konkretes Beispiel wird ein Spiegelrad mit sechs Spiegelflächen angegeben, wobei je ein Paar diametral gegenüberliegender Spiegelflächen eben, konkav und konvex ausgebildet ist. Die Abtastvorrichtung umfasst eine Auswerteelektronik, welche auf die Schärfe des Empfangslichtflecks anspricht und nur das vom schärfsten Abtastlichtfleck kommende Signal auswertet.

Die US 2013/0076852 A1 befasst sich mit einem Scansystem, welches mit einem Lichtstrahl parallele Scanlinien auf einer Bildebene erzeugt. Dazu ist ein Rasterpolygonspiegel vorgesehen, dessen Spiegelfacetten jeweils einen unterschiedlichen Kippwinkel aufweisen. Zum Ausgleich von Krümmungen der von den Spiegelflächen erzeugten Scanlinien wird ein Linsensystem aus im konkreten Beispiel fünf Einzellinsen eingesetzt, welches die Verzerrungen kompensiert.

Die EP 1 965 225 A2 offenbart diverse Varianten, den Drehspiegel eines Laserscanners zusätzlich zu verkippen, um die Scanebene zu variieren und dadurch den Sichtbereich zu vergrößern.

Aus der EP 2 983 030 A2 ist es bekannt, die oben angesprochene Verzerrung der Abtastebenen auf verschiedenste Weisen zu kompensieren. Zum einem durch statische Maßnahmen wie eine Ausformung der Spiegelfacetten als Freiformflächen mit ausgleichender Kontur oder einer Frontscheibe mit mehreren, den Abtastebenen entsprechenden, übereinander liegenden Segmenten mit ausgleichender Kontur. Weiterhin werden dynamische Korrekturmöglichkeiten wie ein mit der Drehung des Spiegelrades synchronisiertes, dynamisches Verkippen der Spiegelfacetten oder Verschieben von Lichtsender und/oder Lichtempfänger genannt. Ziel ist insbesondere eine konstante vertikale Winkelauflösung über die verschiedenen Abtastebenen zu erreichen. Das bedeutet, die oben erwähnten Scanlinien auf einer Zielebene, die von den unterschiedlich geneigten Spiegelfacetten erzeugt werden, sind bevorzugt parallel ausgebildet.

Die WO 1998/016801 A1 beschreibt einen Sensor für intelligente Verkehrssysteme, der mithilfe von Lasertechnologie Fahrzeuge auf mehrspurigen Straßen erkennt und klassifiziert. Der Sensor misst die Anwesenheit, Geschwindigkeit und dreidimensionalen Profile von Fahrzeugen. Ein rotierendes Polygonspiegelsystem scannt die Laserstrahlen über die Fahrspuren, während ein Empfänger die reflektierten Strahlen analysiert. Diese Daten werden verwendet, um Verkehrsparameter wie Flussrate und Durchschnittsgeschwindigkeit zu berechnen.

Aus der US 2009/0002678 A1 ist ein Laserradar-Gerät zur dreidimensionalen Objekterkennung bekannt. Es umfasst einen Laserstrahlgenerator, der einen Laserstrahl erzeugt, und einen optischen Detektor, der reflektiertes Licht erkennt. Ein Ablenksystem, das um eine zentrale Achse drehbar ist, lenkt den Laserstrahl auf das zu beobachtende Feld und das reflektierte Licht zum optischen Detektor. Ein Antrieb dreht das Ablenksystem, während ein Steuermechanismus die Richtung des Laserstrahls ändert.

Die US 2019/0310351 A1 offenbart ein Lidar-System mit einem Polygonspiegel und einer geräuschreduzierenden Funktion. Das System umfasst eine Lichtquelle, die einen Lichtstrahl erzeugt, einen Scanner, der das Sichtfeld des Lidar-Systems abtastet, und einen Empfänger, der das vom entfernten Ziel gestreute Licht erkennt. Der Scanner enthält einen Polygonspiegel mit mehreren reflektierenden Oberflächen, die sich entlang des Umfangs des Blocks drehen. Der Polygonspiegel ist so konfiguriert, dass er während der Drehung akustische Geräusche reduziert, indem er Druckwellen verteilt.

Insgesamt zielen die bekannten Techniken darauf ab, eine möglichst gleichmäßige Abtastung eines Überwachungsbereichs zu erreichen. In vielen Fällen ist jedoch eine flexible, anwendungsabhängige Abtastung des Überwachungsbereichs, beispielsweise hinsichtlich Anzahl, Dichte und Position sowie Form und Neigung von Abtastebenen beziehungsweise Scanlinien wünschenswert. Der Lichtstrahl soll also auf einer möglichst flexiblen Bahnkurve im Überwachungsbereich geführt werden.

Es ist daher Aufgabe der Erfindung, die Überwachung eines 3-dimensionalen Überwachungsbereichs mit einem Mehrebenenscanner zu verbessern.

Diese Aufgabe wird durch einen Mehrebenenscanner und ein Verfahren zum Erfassen von Objekten in einem Überwachungsbereich mit mehreren übereinanderliegenden Ebenen nach Anspruch 1 beziehungsweise 11 gelöst.

Der Mehrebenenscanner weist wie die bekannten LiDAR oder FMCW-LiDAR-Scanner mit Polygonspiegeln einen Lichtsender zum Aussenden eines Lichtstrahls in einen Überwachungsbereich, einen Lichtempfänger zum Empfangen des von Objekten in dem Überwachungsbereich reflektierten Lichtstrahls, eine Auswertungseinheit zum Auswerten eines Empfangssignals des Lichtempfängers sowie ein um eine erste Rotationsachse drehbares Polygonspiegelrad mit mehreren ringförmig angeordneten Spiegelfacetten auf. Die Spiegelfacetten sind bezüglich der ersten Rotationsachse zumindest teilweise zueinander verkippt und der Mehrebenenscanner kann deshalb bei einer Umdrehung der Spiegeleinheit einen Winkelausschnitt des Überwachungsbereichs mehrfach in unterschiedlicher Höhe abtasten. Zwischen dem Lichtsender und dem Polygonspiegelrad ist eine Strahlablenkeinheit zum Einstellen eines Einfallswinkels des Lichtstrahls auf den Spiegelfacetten angeordnet.

Die Erfindung geht nun von dem Grundgedanken aus, dass eine Steuereinheit dazu eingerichtet ist, eine Soll-Bahnkurve für den Lichtstrahl im Überwachungsbereich zu empfangen, und das Polygonspiegelrad und die Strahlablenkeinheit derart anzusteuern, dass der Lichtstrahl den Überwachungsbereich entlang der Soll-Bahnkurve abtastet.

Die Erfindung hat den Vorteil, dass ein Mehrebenen- oder Mehrlagenscanner mit frei vorgebbaren Abtastebenen geschaffen werden kann, bei dem der Lichtstrahl den Überwachungsbereich entlang einer im Wesentlichen frei vorgebbaren Bahnkurve abtasten kann. "Im Wesentlichen" bedeutet hierbei, dass die Möglichkeit der Vorgabe der Bahnkurve lediglich durch Randbedingungen wie die Anzahl und Größe der Spiegelfacetten und die zeitlich und räumlich maximal mögliche Strahlablenkung durch die Strahlablenkeinheit beschränkt ist. Die Erfindung unterscheidet sich damit vom Stand der Technik, bei dem die Abtastebenen durch den Systemaufbau fest definiert und beispielsweise für eine konstante Winkelauflösung optimiert sind.

Die Steuereinheit ist bevorzugt dazu eingerichtet, basierend auf der empfangenen Soll-Bahnkurve Ansteuerungsparameter für das Polygonspiegelrad und die Strahlablenkeinheit zu bestimmen. Dadurch wird eine besonders präzise Abtastung des Überwachungsbereichs entlang der Soll-Bahnkurve ermöglicht.

Die Steuereinheit kann bevorzugt dazu eingerichtet sein, die Soll-Bahnkurve des Lichtstrahls im Überwachungsbereich durch Nutzereingabe zu empfangen. Beispielsweise kann ein Nutzer die Soll-Bahnkurven im Überwachungsbereich an einer Eingabeeinheit, welche diese Information an die Steuereinheit übermittelt, definieren. Eine derartige Nutzereingabe kann beispielsweise bei Inbetriebnahme des Sensors erfolgen. Alternativ oder zusätzlich kann auch eine situationsbedingte Anpassung von Soll-Bahnkurven erfolgen, beispielsweise basierend auf einer Entfernung des Mehrebenenscanners von einem erfassten Objekt. Die Begriffe Steuereinheit und Eingabeeinheit sind hier als Funktionsblöcke zu verstehen, die getrennt oder auch gemeinsam als Hardware realisiert oder beispielsweise auch Bestandteil einer übergeordneten Steuer- und Auswerteeinheit des Sensors sein können.

Die Eingabe einer Soll-Bahnkurve kann insbesondere durch Vorgabe von Abtastebenen im Überwachungsbereich oder von Scanlinien auf einer imaginären Zielebene im Überwachungsbereich erfolgen. Die imaginäre Zielebene kann dabei bevorzugt eine Ebene sein, die parallel zur Rotationsachse des Polygonspiegelrads ausgerichtet und in einem definierten Abstand vom Mehrebenenscanner angeordnet ist.

Durch Vorgabe einer Soll-Bahnkurve kann beispielsweise eine Ausrichtung des Überwachungsbereiches nach einer Montage des Mehrebenenscanners korrigiert werden. Dadurch kann eine mechanische Neuausrichtung des Scanners entfallen. Dies ist insbesondere dann von Vorteil, wenn der Scanner an schwer zugänglichen Stellen befestigt ist (beispielsweise an Kränen, Masten oder in tiefen Schächten), oder sich der Montageort des Scanners im Zeitverlauf verändert.

Eine Soll-Bahnvorgabe für den Lichtstrahl im Überwachungsbereich kann beispielsweise derart erfolgen, dass die eingangs anhand der Figur 5 erläuterte Asymmetrie beseitigt wird, also ein Mehrebenen- oder Mehrlagenscanner mit konstanten Winkeloffsets geschaffen werden kann. Die zusätzlichen Ebenen können also in polarer Betrachtung eine von der Drehstellung unabhängige konstante Abweichung zur mittleren Ebene aufweisen. Dabei muss keine vollständige Kompensation erzielt werden, da auch bereits eine Verringerung der Asymmetrie den Mehrebenenscanner verbessert. Eine vollständige Kompensation ist jedoch zumindest in einer Bemessungsentfernung, also in einem definierten Abstand vom Sensor möglich. Auf die Figur 5 bezogen können somit insbesondere parallele Scanlinien auf einer Zielebene im Überwachungsbereich erzeugt werden. Die Strahlablenkeinheit lenkt den Lichtstrahl dabei so auf die Spiegelfacetten, dass der Effekt des sich im Verlauf der Drehbewegung verändernden Einfallswinkels des Lichtstrahls auf die Spiegelfacetten kompensiert wird, der Lichtstrahl im Überwachungsbereich also die vorgegebene Soll-Bahnkurve abtastet.

Die Strahlablenkeinheit kann als ein um eine zweite Rotationsachse drehbarer Drehspiegel, beispielsweise als Galvanometerspiegel, ausgebildet sein, wobei die zweite Rotationsachse nicht parallel, bevorzugt senkrecht zur ersten Rotationsachse des Polygonspiegelrads ausgerichtet ist. Dadurch kann eine Vertikalablenkung im Überwachungsbereich erzeugt werden, also eine Ablenkung senkrecht zur Ablenkung des Lichtstrahls durch das Polygonspiegelrad. Alternativ kann das Ablenkungselement als MEMS-Spiegel oder als sogenanntes Phased-Array ausgebildet sein, also den Lichtstrahl durch Phasenmodulation ablenken

Die Strahlablenkeinheit kann dazu eingerichtet sein, zusätzlich zum Einfallswinkel des Lichtstrahls eine Auftreffposition des Lichtstrahls auf den Spiegelfacetten einzustellen.

Dadurch ist eine noch bessere Anpassung der Bahnkurve des Lichtstrahls im Überwachungsbereich an die vorgegebene Soll-Bahnkurve möglich.

Die Steuereinheit kann bevorzugt dazu eingerichtet sein, die Ansteuerungsparameter für das Polygonspiegelrad und die Strahlablenkeinheit modellbasiert zu bestimmen, wobei in der Steuereinheit ein Rechenmodell hinterlegt sein kann, mit dem in Abhängigkeit des Rotationswinkel des Polygonspiegelrads Strahlengänge des Lichtstrahls im Überwachungsbereich berechnet oder simuliert werden können. Ausgehend von der empfangenen Soll-Bahnkurve können dann Ansteuerungsparameter für die Strahlablenkung durch die Strahlablenkeinheit, beispielsweise die Stellposition eines Galvanometerspiegels, bestimmt werden, die nötig sind, damit der Lichtstrahl den Überwachungsbereich entlang der Soll-Bahnkurve abtastet.

Das Rechenmodell kann auf bekannten Verfahren der geometrischen Optik wie beispielsweise Ray-Tracing basieren und neben den Strahlablenkungen durch das Polygonspiegelrad und die Strahlablenkeinheit insbesondere den Einfluss einer Sende- und/oder Empfangsoptik des Mehrebenenscanners auf die Strahlengänge des Lichtstrahls berücksichtigen.

Die Berechnung der Ansteuerungsparameter kann rekursiv über symbolische/algebraische Rechnung erfolgen, ausgehend von einem angenommenen Objekt im Überwachungsbereich oder der oben genannten Zielebene. Alternativ oder zusätzlich kann auch eine Vorwärtsrechnung erfolgen, wobei ausgehend von einer variablen Ablenkung des Lichtstrahls durch die Strahlablenkeinheit der Strahlengang hin zum Polygonspiegelrad und weiter auf ein angenommenes Objekt beziehungsweise die Zielebene im Überwachungsbereich berechnet wird. Ein iterativer Suchalgorithmus kann systematisch verschiedene Ablenkungen des Lichtstrahls durch die Strahlablenkeinheit analysieren und sich numerisch der Soll-Bahnkurve annähern. Die Verwendung eines Rechenmodells hat den Vorteil, dass die Ansteuerungsparameter zur Laufzeit berechnet werden können, wobei die Steuereinheit bevorzugt einen Echtzeitrechner zur Berechnung der Ansteuerungsparameter zur Laufzeit aufweisen kann. Dies erlaubt nachträglich beliebige Vorgaben der Strahlablenkung. Wenn nur eine oder bestimmte Konstellationen vorgesehen sind, kann die Berechnung auch im Vorfeld durchgeführt und Lookup-Tables erstellt werden, auf die im Betrieb des Mehrebenscanners zurückgegriffen werden kann.

Die Ansteuerung von Polygonspiegelrad und Strahlablenkeinheit kann bevorzugt über eine kaskadierte Regelung mit Reglern für das Polygonspiegelrad und die Strahlablenkeinheit erfolgen, wobei die Steuereinheit bevorzugt dazu eingerichtet sein kann, eine Drehrate des Polygonspiegelrads zu regeln, insbesondere unabhängig von einer Ansteuerung weiterer Komponenten des Mehrebenenscanners. Die Strahlablenkeinheit erhält ihren Ansteuerungsparameter aus dem oben beschriebenen Rechenmodell, welches eine Position des Polygonspiegelrads empfängt und die Ansteuerungsparameter für die Strahlablenkeinheit unter Verwendung der Soll-Bahnkurve berechnet. Dadurch synchronisiert sich die Strahlablenkeinheit stets mit der Position des Polygonspiegelrads. Die Position des Polygonspiegelrads kann beispielsweise über einen ersten Encoder bereitgestellt werden, der Winkelposition und/oder Winkelgeschwindigkeit beziehungsweise Drehstellung und/oder Drehrate des Polygonspiegelrads erfasst. Ist die Strahlablenkeinheit als Drehspiegel ausgeführt, kann ein zweiter Encoder eine Drehstellung des Drehspiegels erfassen.

Der Regler der Strahlablenkeinheit ist bevorzugt schneller als der Regler des Polygonspiegelrads ausgelegt. Dadurch kann eine Synchronisierung von Polygonspiegelrad und Strahlablenkeinheit sichergestellt werden. Ein Zeitverzug des Regelkreises der Strahlablenkeinheit kann im Rechenmodell berücksichtigt werden, beispielsweise durch ein physikalisches Modell der Strahlablenkeinheit und ihres Regelkreises. Dabei können insbesondere weitere Messgrößen, wie beispielsweise Regelfehler, Strom und Spannung am Galvanometerspiegel oder auch Daten eines Beschleunigungssensors (Störgrößenaufschaltung) am Mehrebenensensor mitberücksichtigt werden.

Die Steuereinheit kann bevorzugt dazu eingerichtet sein, eine Entfernung des Mehrebenenscanners zu einem Zielbereich im Überwachungsbereich zu empfangen und das Polygonspiegelrad und die Strahlablenkeinheit unter Verwendung der Entfernung des Mehrebenenscanners zum Zielbereich im Überwachungsbereich anzusteuern. Dadurch können entfernungsabhängige Verzerrungen der Bahnkurve weiter kompensiert werden.

Der Mehrebenenscanner kann einen Beschleunigungssensor aufweisen, wobei die Steuereinheit dazu eingerichtet ist, Daten des Beschleunigungssensors zu empfangen und das Polygonspiegelrad und die Strahlablenkeinheit unter Verwendung der Daten des Beschleunigungssensors anzusteuern. Durch die Berücksichtigung der Daten des Beschleunigungssensors können beispielsweise Abweichungen der Bahnkurve durch Eigenrotation des Mehrebenenscanners reduziert werden.

Die Steuereinheit kann dazu eingerichtet sein, durch zeitliche Interpolation Zwischenwerte für Encodersignale des Polygonspiegelrades und/oder des Ablenkungselements zu ermitteln und vergleichmäßigte Ansteuerungsparameter für das Ablenkungselement zu erzeugen, beispielsweise Stellbewegungen für den drehbaren Spiegel.

Die Auswertungseinheit ist bevorzugt dazu eingerichtet, die Empfangssignale des Lichtempfängers unter Verwendung von Positionsfehlern des Polygonspiegelrads und/oder der Strahlablenkeinheit zu entzerren.

Das Polygonspiegelrad kann bevorzugt derart von der Steuereinheit angesteuert werden, dass es mit konstanter Geschwindigkeit um die erste Rotationsachse rotiert. Damit wird eine zeitlich gleichmäßige horizontale Ablenkung des Lichtstrahls im Überwachungsbereich erzeugt.

In einer weiteren Ausgestaltung der Erfindung kann das Polygonspiegelrad wenigstens ein Verkippungselement aufweisen, um die Verkippung wenigstens einer Spiegelfacette relativ zur Rotationsachse des Polygonspiegelrads zu verändern. Damit kann der vertikale Abtastbereich des Scanners weiter vergrößert werden. In einer Ausführungsform dieser Ausgestaltung kann die Neigung der Spiegelfacetten synchronisiert mit der Drehbewegung des Polygonspiegelrads verändert werden. Damit ergibt sich ein weiterer Freiheitsgrad zur Beeinflussung der Bahnkurve des Lichtstrahls im Überwachungsbereich.

Der Lichtsender des Mehrebenenscanner kann dazu ausgebildet sein, eine Vielzahl voneinander beabstandeter Lichtstrahlen auszusenden, womit eine schnellere oder dichtere Abtastung des Überwachungsbereichs möglich ist. Da eine Abtastung des Überwachungsbereichs entlang der Soll-Bahnkurve nur für einen der Vielzahl von Lichtstrahlen möglich ist, kann die Steuereinheit dazu eingerichtet sein, das Polygonspiegelrad und die Strahlablenkeinheit derart anzusteuern, dass eine mittlere Abweichung der Lichtstrahlen von der Soll-Bahnkurve minimiert wird.

Der erfindungsgemäße Sensor kann in einer Vielzahl von Systemen und Anwendungen eingesetzt werden, beispielsweise bei den eingangs genannten führerlosen Fahrzeugen (AGV, Automated Guided Vehicle) oder der Überwachung und Klassifizierung von Fahrzeugen, beispielsweise an Autobahnen oder an automatischen Erfassungspunkten (Mautbrücken). Weitere Anwendungsbereiche können beispielsweise die Erfassung von Flugzeugen auf dem Vorfeld eines Flughafens oder die Erfassung von Schiffen und/oder deren Ladung in einem Hafen sein. Bei der Erfassung von Schiffen und deren Ladung in Häfen kann durch die Möglichkeit der Vorgabe einer Soll-Bahnkurve insbesondere eine Anpassung des Überwachungsbereichs an einen (Tiden-abhängigen) Wasserstand erfolgen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigt in:
- Fig. 1: eine Blockdarstellung eines Ausführungsbeispiels eines erfindungsgemäßen Mehrebenenscanners;
- Fig. 2: eine schematische Darstellung einer beispielhaften Regelung eines erfindungsgemäßen Mehrebenenscanners;
- Fig. 3: beispielhafte Bahnkurven, die mit einem erfindungsgemäßen Mehrebenenscanner auf einer Zielebene abgetastet werden können;
- Fig. 4: eine schematische Darstellung einer Verwendung eines erfindungsgemäßen Mehrebenenscanners zur Erfassung eines Schiffes;
- Fig. 5: ein asymmetrischer Verlauf des vertikalen Offsets von Scanlinien in Abhängigkeit des Drehwinkels bei einem herkömmlichen Mehrebenenscanner.

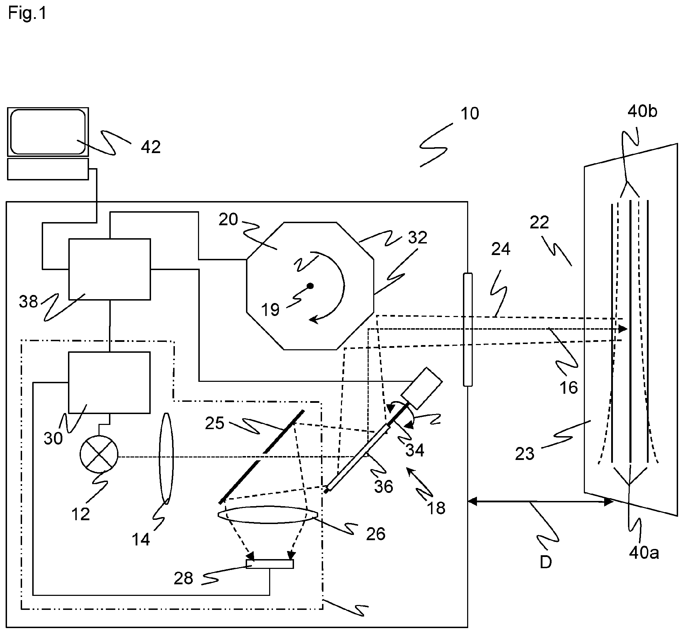

Figur 1 zeigt eine Blockdarstellung eines Mehrebenenscanners 10. Ein Lichtsender 12, beispielsweise eine Laserdiode oder eine LED, erzeugt mit Hilfe einer Sendeoptik 14 einen Lichtstrahl 16, der ein erstes Mal über eine Stahlablenkeinheit 18 und ein zweites Mal über ein um eine erste Rotationsachse 19 rotierendes Polygonspiegelrad 20 umgelenkt und dann in einen Überwachungsbereich 22 ausgesandt wird.

Trifft der Lichtstrahl 16 in dem Überwachungsbereich 22 auf ein Objekt, so kehrt ein reflektierter Lichtstrahl 24 zu dem Mehrebenenscanner zurück, wird erneut an dem Polygonspiegelrad 20 und der Strahlablenkeinheit 18 umgelenkt und dann über einen Strahlteiler 25 und eine Empfangsoptik 26 auf einen Lichtempfänger 28 abgebildet. Dabei wird hier sprachlich nicht zwischen Reflexion und der wesentlich häufiger auftretenden diffusen Remission an dem Objekt unterschieden. Der Strahlteiler 25 ist entweder als Strahlteiler oder als Lochspiegel ausgebildet. Möglich wäre auch eine bi-axiale Ausführung. Lichtstrahl 16 und Empfangslicht 24 sind dann im Wesentlichen parallel zueinander mit einem geringen Abstand in Richtung der Drehachse des Polygonspiegelrades 20 angeordnet.

Ein von dem Lichtempfänger 28 erzeugtes Empfangssignal wird an eine Auswertungseinheit 30 übergeben. Dort wird beispielsweise erkannt, ob überhaupt ein Objekt angetastet wurde, und bei Erfassung eines Objekts vorzugsweise mit einem Lichtlaufzeit- oder FMCW- Verfahren dessen Abstand ermittelt.

Das Polygonspiegelrad 20 ist ein Beispiel für eine drehbare Spiegeleinheit mit mehreren Spiegelfacetten 32 an seinem Außenumfang. Die Anzahl der Spiegelfacetten 32 korrespondiert mit dem Scanwinkelbereich, der umso größer ist, je weniger Spiegelfacetten 32 vorgesehen sind. Demnach ist die Anzahl von acht Spiegelfacetten 32 keineswegs festgelegt, sondern es können ebenso mehr oder weniger Spiegelfacetten 32 vorgesehen sein. Die Grundfläche muss auch kein regelmäßiges Vieleck sein, sondern es ist prinzipiell auch möglich, Spiegelfacetten 32 unterschiedlicher Länge vorzusehen.

Obwohl in der Draufsicht der Figur 1 nicht erkennbar, sind die Spiegelfacetten 32 gegeneinander verkippt. Damit ist nicht die durch die Natur des Polygons vorgegebene Verkippung in horizontaler Richtung gemeint, sondern eine zusätzliche individuelle Verkippung in vertikaler Richtung. Die Flächen der Spiegelfacetten 32 sind also nicht parallel zur Mittenachse des Polygonspiegelrads 20 ausgerichtet, welche in der gezeigten Ausführungsform zugleich die erste Rotationsachse 19 bildet, sondern dagegen individuell um zumindest einige Grad verkippt. Je nach horizontaler Neigung der jeweils von dem Lichtstrahl 16 des Lichtsenders 12 getroffenen Spiegelfacette 32 wird daher eine andere Ebene über einen der horizontalen Ausdehnung der Spiegelfacette 32 entsprechenden Winkelbereich abgetastet, und so entsteht der Mehrebenenscan, angedeutet durch Bahnkurven 40a, 40b des Lichtstrahls 16, die sich auf einer senkrecht zur Zeichnungsebene stehenden Zielebene im Überwachungsbereich 22 ergeben würden, die Zielebene repräsentiert einen Zielbereich 23 im Überwachungsbereich, der sich im Abstand D vom Mehrebenenscanner 10 befindet. Die jeweilige Neigung der Spiegelfacetten ist vorzugsweise individuell, aber auch mehrere Spiegelfacetten 32 gleicher Neigung sind vorstellbar, dann wird die entsprechende Ebene je Umdrehung des Polygonspiegelrads 20 mehrfach abgetastet.

Die Auswertungseinheit 30 kennt die jeweilige Drehstellung φ des Polygonspiegelrads 20, beispielsweise über einen ersten Encoder, der in Figur 1 ebenso wie der Antrieb für die Rotation nicht gezeigt und an sich bekannt ist. Die Drehstellung φ des Polygonspiegelrads 20 enthält nicht nur direkt die Information über den horizontalen Winkel, sondern indirekt auch über den vertikalen Winkel, wenn die Neigungen der Spiegelfacetten 32 zur ersten Rotationsachse 19 gespeichert werden. Die Auswertungseinheit 30 kennt weiterhin den vertikalen Winkel, unter dem der Lichtstrahl 16 die Strahlablenkeinheit 18 in Richtung des Polygonspiegelrads 20 verlässt. Die Strahlablenkeinheit 18 ist im vorliegenden Ausführungsbeispiel als Drehspiegel 36, beispielsweise als Galvanometerspiegel ausgeführt, dessen Rotationsachse 34 senkrecht zur ersten Rotationsachse 19 des Polygonspiegelrads 20 ausgerichtet ist. Der Winkel, unter dem der Lichtstrahl 16 die Strahlablenkeinheit 18 in Richtung Polygonspiegelrad 20 verlässt, ergibt sich dabei über die Drehstellung θ des Drehspiegels 36, die über einen ebenfalls nicht gezeigten zweiten Encoder erfasst wird. Unter Kenntnis der Drehstellung φ des Polygonspiegelrads 20 und der Drehstellung θ des Drehspiegel 36 werden mit einem über ein Lichtlaufzeitverfahren gemessenen Abstand deshalb Objektpositionen oder Objektkonturen in dreidimensionalen Kugelkoordinaten erfassbar.

Das Polygonspiegelrad 20 und die Strahlablenkeinheit 18 werden von einer Steuereinheit 38 angesteuert. Die Steuereinheit 38 ist dazu eingerichtet, eine Soll-Bahnkurve 40a für den Lichtstrahl 16 im Überwachungsbereich 22 zu empfangen, beispielsweise durch Nutzereingabe über eine Eingabeeinheit 42.

Wie einleitend unter Bezugnahme auf die Figur 5 erläutert, erzeugt nur eine Spiegelfacette 32 ohne vertikale Neigung zur ersten Rotationsachse 19 (Tilt = 0°) eine echte Abtastebene, die unabhängig von ihrer tatsächlichen Lage als mittlere oder horizontale Ebene bezeichnet wird. Die anderen Ebenen sind streng genommen im geometrischen Sinne trotz ihrer hier gewählten Bezeichnung keine Ebenen, was zu einer verzerrten Bahnkurve 40b des Lichtstrahls 16 im Überwachungsbereich 22 führt, die von der vorgegebenen Soll-Bahnkurve 40a abweicht.

Zur Kompensation dieses Effekts ist die Steuereinheit 38 dazu eingerichtet, das Polygonspiegelrad 20 und die Strahlablenkeinheit 18 derart anzusteuern, dass der Lichtstrahl den Überwachungsbereich entlang der Soll-Bahnkurve 40a abtastet.

Dazu kann die Steuereinheit 38 zunächst eine Drehzahl des Polygonspiegelrads 20 einregeln und konstant halten. Die Steuereinheit 38 ist dann weiterhin dazu ausgebildet, auf Basis der Drehstellung φ des Polygonspiegelrads 20 unter Verwendung eines Rechenmodells die Drehstellung θ des Drehspiegels 36 zu bestimmen, die nötig ist, um die Soll-Bahnkurve 40 abzutasten, und den Drehspiegel 36 entsprechend anzusteuern. Dadurch synchronisiert sich der Drehspiegel 36 stets mit dem Polygonspiegelrad 20, und der Lichtstrahl tastet die Soll-Bahnkurve 40a.

Der Grundaufbau des Mehrebenenscanners 10 gemäß Figur 1 ist nur beispielhaft zu verstehen. So können etwa Sende- und Empfangspfad auch anders getrennt werden als durch den dargestellten Strahlteiler 25, oder das Polygonspiegelrad 20 kann gegenüber Sende- und Empfangspfad anders angeordnet und orientiert werden.

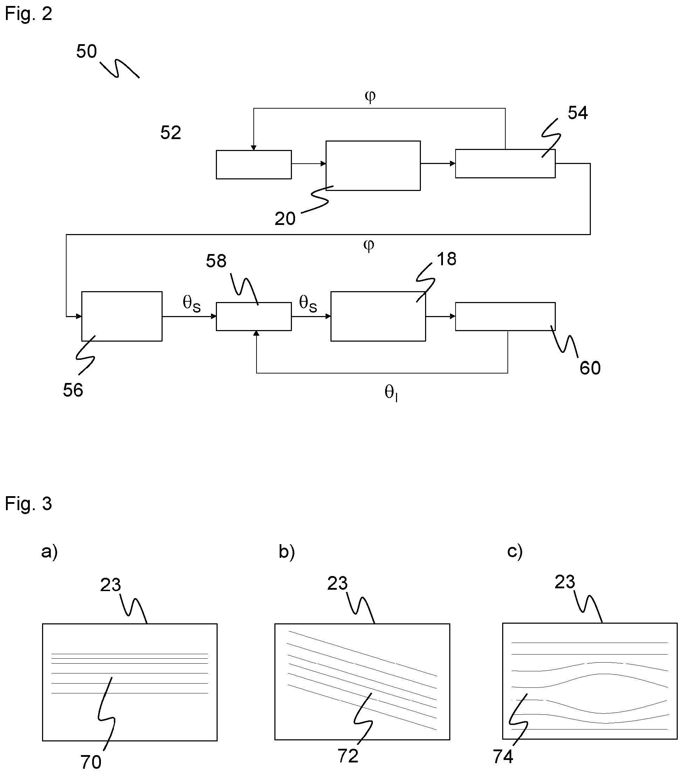

Figur 2 zeigt eine schematische Darstellung einer beispielhaften Regelung 50 des Mehrebenenscanners 10 durch die Steuereinheit 38. Ein erster Regler 52 ist dazu eingerichtet, in einem ersten Schritt die Drehzahl des Polygonspiegelrads 20 einzuregeln und konstant zu halten. Die Drehzahl ergibt sich durch die Vorgabe einer Geschwindigkeit, mit der der Lichtstrahl 16 den Überwachungsbereich 22 abtasten soll. Ein erster Encoder 54 ermittelt die Drehstellung φ des Polygonspiegelrads 20 und gibt diese an den ersten Regler 52 weiter, der basierend auf der ermittelten Drehstellung φ die Drehzahl des Polygonspiegelrads 20 stabilisieren kann.

Die Drehstellung φ des Polygonspiegelrads 20 wird zusätzlich an ein Rechenmodell 56 weitergegeben, welches unter Verwendung der Drehstellung φ des Polygonspiegelrads 20 und der vorgegebenen Soll-Bahnkurve 40a den Auftreffwinkel des Lichtstrahls 16 auf den Spiegelfacetten 32 und daraus einen Ansteuerungsparameter für die Ablenkeinheit 18 berechnet, also im vorliegenden Beispiel eine Soll-Drehstellung θ_{S} des Drehspiegels 36. Die Soll-Drehstellung θ_{S} wird an einen zweiten Regler 58 weitergegeben, der die Ablenkeinheit 18 beziehungsweise den Drehspiegel 36 entsprechend einregelt. Dadurch synchronisiert sich die Ablenkeinheit 18 beziehungsweise der Drehspiegel 36 mit dem Polygonspiegelrad 20. Ein zweiter Encoder 60 ermittelt eine Ist-Drehstellung θ_{I} des Drehspiegels 36 und gibt diese an den zweiten Regler 58 zurück, der basierend auf der ermittelten Ist-Drehstellung θ_{I} eine Abweichung von der Soll-Drehstellung θ_{S} des Drehspiegels 36 korrigiert.

Der zweite Regler 58 der Ablenkeinheit 18 beziehungsweise des Drehspiegels 36 muss schneller als der erste Regler 52 des Polygonspiegelrads 20 ausgelegt sein, damit eine Synchronisierung sichergestellt ist. Der Zeitverzug der Regelung der Ablenkeinheit 18 muss je nach Reglergeschwindigkeit im Rechenmodell 56 berücksichtigt werden. Hierzu kann ein physikalisches Modell der Ablenkeinheit 18 und ihres Reglers 58 mit einbezogen werden. Dabei können auch weitere Messgrößen, wie beispielsweise Regelfehler, Strom und Spannung am Drehspiegel 36 oder auch Daten eines Beschleunigungssensors (Störgrößenaufschaltung) am Mehrebenensensor 10 mitberücksichtigt werden.

Figur 3 zeigt verschiedene beispielhafte Bahnkurven, die mit einem erfindungsgemäßen Mehrebenenscanner 10 auf einer Zielebene 23 im Überwachungsbereich 22 abgetastet werden können. Da die Bahnkurve im Wesentlichen frei geregelt werden kann, sind theoretisch alle Bahnformen möglich, welche eine monoton fortschreitende Drehstellung φ des Polygonspiegelrads 20 berücksichtigen.

In a) sind im Wesentlichen parallel verlaufende, horizontale Bahnkurven 70 gezeigt, die im oberen Bereich eine erhöhte Dichte aufweisen. Es können also Scanlinien mit lokal unterschiedlichen Dichten erzeugt werden.

Wie in b) gezeigt, sind auch geneigte Bahnkurven 72 möglich, womit eine Ausrichtungskorrektur, beispielsweise bei einem verkippten Mehrebenenscanner möglich ist, der auch nach der Montage jederzeit in der Ausrichtung seines Überwachungsbereichs korrigiert werden kann.

In c) sind frei definierte Bahnkurven 74 dargestellt, mit denen Bereiche im Überwachungsbereich vom Lichtstrahl ausgespart werden können, beispielsweise lichtempfindliche Bereiche oder Regionen, in denen keine Datenaufnahme nötig ist.

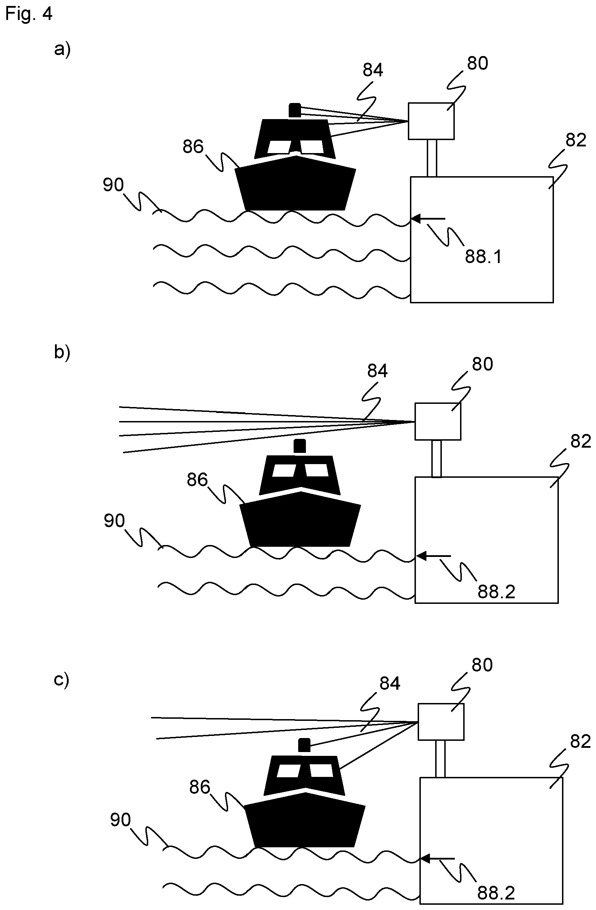

Figur 4 zeigt eine schematische Darstellung einer Verwendung eines erfindungsgemäßen Mehrebenenscanners 80, der an einem Kai 82 eines Hafens angeordnet ist. In a) erfassen die vom Mehrebenenscanner 80 ausgesendeten Lichtstrahlen 84 ein Schiff 86, welches bei einem ersten Pegelstand 88.1 der Wasseroberfläche 90 am Kai 82 liegt.

Sinkt die Wasseroberfläche 90 wie in b) gezeigt auf einen zweiten Pegelstand 88.2, beispielsweise durch einen Tidenhub, würden die vom Mehrebenenscanner 80 ausgesendeten Lichtstrahlen 84 das Schiff 86 verfehlen und könnten dieses insbesondere in einem Nahbereich des Kais 82 nicht mehr zuverlässig erfassen.

Durch Anpassung der Soll-Bahnkurven können wie in c) gezeigt die vom Mehrebenenscanner 80 ausgesendeten Lichtstrahlen 84 derart aufgefächert werden, dass das Schiff 86 erfasst werden kann, ohne eine Ausrichtung des Mehrebenenscanners 80 mechanisch zu verändern. Das Auffächern der Lichtstrahlen 84 hat zudem den Vorteil, dass auch weit vom Kai 82 entfernte Objekte (nicht gezeigt) weiterhin detektiert werden können, während bei einer mechanischen Verkippung des gesamten Mehrebenenscanners 80 ohne Auffächerung der Lichtstrahlen 84 lediglich der Nahbereich des Kais 82 erfasst würde.

## Patentansprüche

1. Mehrebenenscanner (10) mit einem Lichtsender (12) zum Aussenden eines Lichtstrahls (16) in einen Überwachungsbereich (22), mit einem Lichtempfänger (28) zum Empfangen des von Objekten in dem Überwachungsbereich (22) reflektierten Lichtstrahls (24), mit einer Auswertungseinheit (30) zum Auswerten eines Empfangssignals des Lichtempfängers (28) und einem um eine erste Rotationsachse (19) drehbaren Polygonspiegelrad (20) zur periodischen Ablenkung des Lichtstrahls (16, 24), das mehrere ringförmig und zumindest teilweise gegeneinander zur ersten Rotationsache (19) verkippt angeordnete Spiegelfacetten (32) aufweist, um so als Überwachungsbereich (22) je Umdrehung des Polygonspiegelrads (20) einen Winkelausschnitt des Überwachungsbereichs (22) mehrfach in unterschiedlicher Höhe abzutasten, also mehrere übereinanderliegende Abtastebenen, wobei zwischen dem Lichtsender (12) und dem Polygonspiegelrad (20) eine Strahlablenkeinheit (18) zum Einstellen eines Auftreffwinkels des Lichtstrahls (16) auf den Spiegelfacetten (32) angeordnet ist
**dadurch gekennzeichnet,**
**dass** eine Steuereinheit (38) dazu eingerichtet ist, eine Soll-Bahnkurve (40a) für den Lichtstrahl (16) im Überwachungsbereich (22) zu empfangen und das Polygonspiegelrad (20) und die Strahlablenkeinheit (18) derart anzusteuern, dass der Lichtstrahl (16) den Überwachungsbereich (22) entlang der Soll-Bahnkurve (40a) abtastet.

2. Mehrebenenscanner (10) nach Anspruch 1, wobei die Steuereinheit dazu eingerichtet ist, basierend auf der empfangenen Soll-Bahnkurve (40a) Ansteuerungsparameter für das Polygonspiegelrad (20) und die Strahlablenkeinheit (18) zu bestimmen.

3. Mehrebenenscanner (10) nach Anspruch 1 oder 2, wobei der Mehrebenenscanner (10) eine Eingabeeinheit (42) zur Eingabe der Soll-Bahnkurve (40a) aufweist, und die Steuereinheit (38) dazu eingerichtet ist, die Soll-Bahnkurve (40a) von der Eingabeeinheit (42) zu empfangen.

4. Mehrebenenscanner (10) nach Anspruch 2 oder 3, wobei die Steuereinheit (38) dazu eingerichtet ist, die Ansteuerungsparameter für das Polygonspiegelrad (20) und die Strahlablenkeinheit (18) modellbasiert zu bestimmen.

5. Mehrebenenscanner (10) nach einem der vorhergehenden Ansprüche, wobei der Mehrebenenscanner (10) einen ersten Regler (52) zur Regelung des Polygonspiegelrads (20) und einen zweiten Regler (58) zur Regelung der Strahlablenkeinheit (18) aufweist.

6. Mehrebenenscanner (10) nach Anspruch 5, wobei der zweite Regler (58) schneller als der erste Regler (52) ausgelegt ist.

7. Mehrebenenscanner (10) nach einem der vorhergehenden Ansprüche, wobei die Steuereinheit (38) dazu eingerichtet ist, eine Entfernung (D) des Mehrebenenscanners (10) zu einem Zielbereich (23) im Überwachungsbereich (22) zu empfangen und das Polygonspiegelrad (20) und die Strahlablenkeinheit (18) unter Verwendung der Entfernung (D) des Mehrebenenscanners (10) zum Zielbereich (23) im Überwachungsbereich (22) anzusteuern.

8. Mehrebenenscanner (10) nach einem der vorhergehenden Ansprüche, **dadurch gekennzeichnet, dass** der Mehrebenenscanner (10) einen Beschleunigungssensor aufweist, und die Steuereinheit (38) dazu eingerichtet ist, Daten des Beschleunigungssensors zu empfangen und das Polygonspiegelrad (20) und die Strahlablenkeinheit (18) unter Verwendung der Daten des Beschleunigungssensors anzusteuern.

9. Mehrebenenscanner (10) nach einem der vorhergehenden Ansprüche, wobei die Strahlablenkeinheit (18) ein um eine zweite Rotationsachse (34) drehbarer Drehspiegel (36), insbesondere ein Galvanometerspiegel ist, wobei die zweite Rotationsachse (34) nicht parallel zur ersten Rotationsachse (19) ausgerichtet ist.

10. Mehrebenenscanner (10) nach einem der vorhergehenden Ansprüche,
wobei wenigstens eine Spiegelfacette (32) ein Verkippungselement aufweist, um die Spiegelfacette (32) einstellbar zur ersten Rotationsache (19) zu verkippen, und die Steuereinheit (38) dazu eingerichtet ist, das Verkippungselement anzusteuern.

11. Verfahren zum Erfassen von Objekten mit einem Mehrebenenscanner (10), bei dem ein Lichtstrahl (16) in einen Überwachungsbereich (22) ausgesandt und nach Reflexion an einem Objekt in dem Überwachungsbereich (22) wieder empfangen und ausgewertet wird, wobei der Überwachungsbereich (22) zyklisch abgetastet wird, indem der Lichtstrahl (16) an einem um eine erste Rotationsachse (19) drehbaren Polygonspiegelrad (20) mit mehreren ringförmig und zumindest teilweise gegeneinander verkippt angeordneten Spiegelfacetten (32) abgelenkt wird, um so im Überwachungsbereich (22) je Umdrehung der Spiegeleinheit (20) einen Winkelausschnitt mehrfach in unterschiedlicher Höhe abzutasten, also mehrere übereinanderliegende Ebenen, wobei eine zwischen dem Lichtsender (12) und dem Polygonspiegelrad (20) angeordnete Strahlablenkeinheit (18) einen Auftreffwinkel des Lichtstrahls (16) auf den Spiegelfacetten (32) einstellt,
**dadurch gekennzeichnet,**
**dass** eine Steuereinheit (38) eine Soll-Bahnkurve (40a) für den Lichtstrahl (16) im Überwachungsbereich (22) empfängt und das Polygonspiegelrad (20) und die Strahlablenkeinheit (18) derart ansteuert, dass der Lichtstrahl (16) den Überwachungsbereich (22) entlang der Soll-Bahnkurve (40a) abtastet.

12. Verfahren nach Anspruch 11, wobei die Steuereinheit (38) unter Verwendung der Soll-Bahnkurve (40a) Ansteuerungsparameter für das Polygonspiegelrad (20) und die Strahlablenkeinheit (18) bestimmt.

13. Verfahren nach Anspruch 12, wobei die Steuereinheit (38) in Abhängigkeit einer Drehstellung (φ) des Polygonspiegelrads (20) Strahlengänge des Lichtstrahls (16) im Überwachungsbereich (22) berechnet.

14. Verfahren nach Anspruch 12, wobei die Strahlablenkeinheit (18) einen Drehspiegel (36) aufweist, der den Auftreffwinkel des Lichtstrahls (16) auf den Spiegelfacetten (32) einstellt, und die Steuereinheit (38) in Abhängigkeit einer Drehstellung (φ) des Polygonspiegelrads (20) eine Drehstellung (θ) des Drehspiegels (36) berechnet.

15. Verfahren nach Anspruch 12, wobei die Steuereinheit (38) die Ansteuerungsparameter für das Polygonspiegelrad (20) und die Strahlablenkeinheit (18) unter Verwendung einer Entfernung (D) des Mehrebenenscanners (10) zu einem Zielbereich (23) im Überwachungsbereich (22) bestimmt.

## Claims

1. A multi-plane scanner (10) comprising a light transmitter (12) for transmitting a light beam (16) into a monitored zone (22), a light receiver (28) for receiving the light beam (24) reflected by objects in the monitored zone (22), an evaluation unit (30) for evaluating a reception signal of the light receiver (28) and a polygonal mirror wheel (20) rotatable about a first axis of rotation (19) for periodically deflecting the light beam (16, 24) and having a plurality of mirror facets (32) arranged in a ring shape and at least partly tilted relative to one another with respect to the first axis of rotation (19) in order thus to scan an angular section of the monitored zone (22) multiple times at different heights as the monitored zone (22) per revolution of the polygon mirror wheel (20), i.e. a plurality of scanning planes disposed above one another, wherein a beam deflection unit (18) for setting an angle of incidence of the light beam (16) on the mirror facets (32) is arranged between the light transmitter (12) and the polygon mirror wheel (20),
**characterized in that**
a control unit (38) is configured to receive a desired trajectory (40a) for the light beam (16) in the monitored zone (22) and to control the polygon mirror wheel (20) and the beam deflection unit (18) such that the light beam (16) scans the monitored zone (22) along the desired trajectory (40a).

2. A multi-plane scanner (10) according to claim 1, wherein the control unit is configured to determine control parameters for the polygon mirror wheel (20) and the beam deflection unit (18) based on the received desired trajectory (40a).

3. A multi-plane scanner (10) according to claim 1 or 2, wherein the multi-plane scanner (10) has an input unit (42) for inputting the desired trajectory (40a) and the control unit (38) is configured to receive the desired trajectory (40a) from the input unit (42).

4. A multi-plane scanner (10) according to claim 2 or 3, wherein the control unit (38) is configured to determine the control parameters for the polygon mirror wheel (20) and the beam deflection unit (18) in a model-based manner.

5. A multi-plane scanner (10) according to any one of the preceding claims, wherein the multi-plane scanner (10) has a first regulator (52) for regulating the polygon mirror wheel (20) and a second regulator (58) for regulating the beam deflection unit (18).

6. A multi-plane scanner (10) according to claim 5, wherein the second regulator (58) is designed as faster than the first regulator (52).

7. A multi-plane scanner (10) according to any one of the preceding claims, wherein the control unit (38) is configured to receive a distance (D) of the multi-plane scanner (10) from a target zone (23) in the monitored zone (22) and to control the polygon mirror wheel (20) and the beam deflection unit (18) using the distance (D) of the multi-plane scanner (10) from the target zone (23) in the monitored zone (22).

8. A multi-plane scanner (10) according to any one of the preceding claims, **characterized in that** the multi-plane scanner (10) has an acceleration sensor and the control unit (38) is configured to receive data of the acceleration sensor and to control the polygon mirror wheel (20) and the beam deflection unit (18) using the data of the acceleration sensor.

9. A multi-plane scanner (10) according to any one of the preceding claims, wherein the beam deflection unit (18) is a rotating mirror (36) rotatable about a second axis of rotation (34), in particular a galvanometer mirror, wherein the second axis of rotation (34) is not aligned in parallel with the first axis of rotation (19).

10. A multi-plane scanner (10) according to any one of the preceding claims, wherein at least one mirror facet (32) has a tilting element to tilt the mirror facet (32) in a settable manner with respect to the first rotational object (19) and the control unit (38) is configured to control the tilting element.

11. A method for detecting objects using a multi-plane scanner (10), in which a light beam (16) is transmitted into a monitored zone (22) and, after reflection at an object in the monitored zone (22), is received again and evaluated, wherein the monitored zone (22) is cyclically scanned in that the light beam (16) is deflected at a polygonal mirror wheel (20) rotatable about a first axis of rotation (19) and having a plurality of mirror facets (32) arranged in a ring shape and at least partly tilted relative to one another in order thus to scan an angular section multiple times at different heights in the monitored zone (22) per revolution of the mirror unit (20), i.e. a plurality of planes disposed above one another, wherein a beam deflection unit (18) arranged between the light transmitter (12) and the polygon mirror wheel (20) sets an angle of incidence of the light beam (16) on the mirror facets (32),
**characterized in that**
a control unit (38) receives a desired trajectory (40a) for the light beam (16) in the monitored zone (22) and controls the polygon mirror wheel (20) and the beam deflection unit (18) such that the light beam (16) scans the monitored zone (22) along the desired trajectory (40a).

12. A method according to claim 11, wherein the control unit (38) determines control parameters for the polygon mirror wheel (20) and the beam deflection unit (18) using the desired trajectory (40a).

13. A method according to claim 12, wherein the control unit (38) calculates optical paths of the light beam (16) in the monitored zone (22) in dependence on a rotational position (φ) of the polygon mirror wheel (20).

14. A method according to claim 12, wherein the beam deflection unit (18) has a rotating mirror (36) which sets the angle of incidence of the light beam (16) on the mirror facets (32) and the control unit (38) calculates a rotational position (θ) of the rotating mirror (36) in dependence on a rotational position (φ) of the polygonal mirror wheel (20).

15. A method according to claim 12, wherein the control unit (38) determines the control parameters for the polygon mirror wheel (20) and the beam deflection unit (18) using a distance (D) of the multi-plane scanner (10) from a target zone (23) in the monitored zone (22)

## Revendications

1. Scanner multi-plans (10) comportant un émetteur de lumière (12) pour émettre un faisceau lumineux (16) vers une zone à surveiller (22), un récepteur de lumière (28) pour recevoir le faisceau lumineux (24) réfléchi par des objets situés dans la zone à surveiller (22), une unité d'évaluation (30) pour évaluer un signal de réception du récepteur de lumière (28), et une roue à miroir polygonal (20) apte à tourner autour d'un premier axe de rotation (19), destinée à dévier périodiquement le faisceau lumineux (16, 24) et présentant plusieurs facettes de miroir (32) disposées en forme d'anneau et inclinées au moins en partie les unes par rapport aux autres et par rapport au premier axe de rotation (19), afin de balayer ainsi, par tour de rotation de la roue à miroir polygonal (20), une section angulaire de la zone à surveiller (22) plusieurs fois, à différentes hauteurs, c'est-à-dire plusieurs plans de balayage superposés, en tant que zone à surveiller (22),
une unité de déviation de faisceau (18) étant disposée entre l'émetteur de lumière (12) et la roue à miroir polygonal (20) afin d'ajuster un angle d'incidence du faisceau lumineux (16) sur les facettes de miroir (32),
**caractérisé en ce que**
une unité de commande (38) est conçue pour recevoir une trajectoire de consigne (40a) pour le faisceau lumineux (16) dans la zone à surveiller (22) et pour commander la roue à miroir polygonal (20) et l'unité de déviation de faisceau (18) de telle sorte que le faisceau lumineux (16) balaye la zone à surveiller (22) le long de la trajectoire de consigne (40a).

2. Scanner multi-plans (10) selon la revendication 1,
dans lequel l'unité de commande est conçue pour définir des paramètres de commande de la roue à miroir polygonal (20) et de l'unité de déviation de faisceau (18) en se basant sur la trajectoire de consigne (40a) reçue.

3. Scanner multi-plans (10) selon la revendication 1 ou 2,
dans lequel le scanner multi-plans (10) comprend une unité d'entrée (42) pour entrer la trajectoire de consigne (40a), et l'unité de commande (38) est conçue pour recevoir la trajectoire de consigne (40a) provenant de l'unité d'entrée (42).

4. Scanner multi-plans (10) selon la revendication 2 ou 3,
dans lequel l'unité de commande (38) est conçue pour définir les paramètres de commande de la roue à miroir polygonal (20) et de l'unité de déviation de faisceau (18) en se basant sur un modèle.

5. Scanner multi-plans (10) selon l'une des revendications précédentes,
dans lequel le scanner multi-plans (10) comprend un premier régulateur (52) destiné à réguler la roue à miroir polygonal (20) et un deuxième régulateur (58) destiné à réguler l'unité de déviation de faisceau (18).

6. Scanner multi-plans (10) selon la revendication 5,
dans lequel le deuxième régulateur (58) est conçu pour être plus rapide que le premier régulateur (52).

7. Scanner multi-plans (10) selon l'une des revendications précédentes,
dans lequel l'unité de commande (38) est conçue pour recevoir une distance (D) entre le scanner multi-plans (10) et une zone cible (23) dans la zone à surveiller (22) et pour commander la roue à miroir polygonal (20) et l'unité de déviation de faisceau (18) en utilisant la distance (D) entre le scanner multi-plans (10) et la zone cible (23) dans la zone à surveiller (22).

8. Scanner multi-plans (10) selon l'une des revendications précédentes,
**caractérisé en ce que** le scanner multi-plans (10) comprend un capteur d'accélération, et l'unité de commande (38) est conçue pour recevoir les données du capteur d'accélération et pour commander la roue à miroir polygonal (20) et l'unité de déviation de faisceau (18) en utilisant les données du capteur d'accélération.

9. Scanner multi-plans (10) selon l'une des revendications précédentes,
dans lequel l'unité de déviation de faisceau (18) est un miroir rotatif (36) apte à tourner autour d'un deuxième axe de rotation (34), en particulier un miroir galvanométrique, le deuxième axe de rotation (34) n'étant pas parallèle au premier axe de rotation (19).

10. Scanner multi-plans (10) selon l'une des revendications précédentes,
dans lequel au moins une facette de miroir (32) comprend un élément d'inclinaison pour incliner la facette de miroir (32) de manière ajustable par rapport au premier axe de rotation (19), et l'unité de commande (38) est conçue pour commander l'élément d'inclinaison.

11. Procédé de détection d'objets à l'aide d'un scanner multi-plans (10),
dans lequel un faisceau lumineux (16) est émis vers une zone à surveiller (22) et, après réflexion sur un objet situé dans la zone à surveiller (22), est reçu et évalué,
dans lequel
la zone à surveiller (22) est balayée de manière cyclique du fait que le faisceau lumineux (16) est dévié sur une roue à miroir polygonal (20) apte à tourner autour d'un premier axe de rotation (19) et présentant plusieurs facettes de miroir (32) disposées en anneau et inclinées au moins en partie les unes par rapport aux autres, afin de balayer ainsi, par tour de rotation de l'unité de miroir (20), une section angulaire plusieurs fois, à différentes hauteurs, c'est-à-dire plusieurs plans superposés, dans la zone à surveiller (22),
une unité de déviation de faisceau (18) disposée entre l'émetteur de lumière (12) et la roue à miroir polygonal (20) ajuste un angle d'incidence du faisceau lumineux (16) sur les facettes de miroir (32), **caractérisé en ce que**
une unité de commande (38) reçoit une trajectoire de consigne (40a) pour le faisceau lumineux (16) dans la zone à surveiller (22) et commande la roue à miroir polygonal (20) et l'unité de déviation de faisceau (18) de telle sorte que le faisceau lumineux (16) balaye la zone à surveiller (22) le long de la trajectoire de consigne (40a).

12. Procédé selon la revendication 11,
dans lequel l'unité de commande (38) définit des paramètres de commande de la roue à miroir polygonal (20) et de l'unité de déviation de faisceau (18) en utilisant la trajectoire de consigne (40a).

13. Procédé selon la revendication 12,
dans lequel l'unité de commande (38) calcule les chemins optiques du faisceau lumineux (16) dans la zone à surveiller (22) en fonction d'une position de rotation (φ) de la roue à miroir polygonal (20).

14. Procédé selon la revendication 12,
dans lequel l'unité de déviation de faisceau (18) comprend un miroir rotatif (36) qui ajuste l'angle d'incidence du faisceau lumineux (16) sur les facettes de miroir (32), et l'unité de commande (38) calcule une position de rotation (θ) du miroir rotatif (36) en fonction d'une position de rotation (φ) de la roue à miroir polygonal (20).

15. Procédé selon la revendication 12,
dans lequel l'unité de commande (38) définit les paramètres de commande de la roue à miroir polygonal (20) et de l'unité de déviation de faisceau (18) en utilisant une distance (D) entre le scanner multi-plans (10) et une zone cible (23) dans la zone à surveiller (22).
